# EUROPEAN PATENT APPLICATION

(11) **EP 3 800 969 A1**
(43) Date of publication of application: **07.04.2021**
(21) Application number: 19201079.1
(22) Date of filing: 02.10.2019
(51) Int. Cl.: H05B 45/20

(54) **LIGHTING DEVICE AND LIGHTING SYSTEM**

(71) Applicant: Lumileds Holding B.V., 1118 CL Schiphol (NL)
(72) Inventor: The designation of the inventor has not yet been filed
(74) Representative: ter Heegde, Paul Gerard Michel

(57) **Abstract**

According to the invention a lighting device is provided, comprising: at least one first light source configured to emit light of a first color; at least one second light source configured to emit light of a second color; wherein the first color is a cyan color, wherein the at least one first light source and the at least one second light source are arranged at the lighting device and wherein x and y color values of the first color and the second color are selected such that light emitted from the at least one first light source and light emitted from the at least one second light source can be mixed to generate white light.

## Description

### FIELD OF THE INVENTION

The present disclosure relates to a lighting device, in particular to an LED based lighting device for vehicular applications and/or for display applications, and to a corresponding lighting system.

### BACKGROUND OF THE INVENTION

Light emitting diodes (LEDs) are advantageous light sources and are particularly suitable for example for automotive lighting systems including headlights, daytime running lamps, position lamps, fog lamps, indicator lamps, brake lamps, logo illumination, decorative light, interior lights or reversing lamps. LEDs are further advantageous light sources for LED displays. However, while advantages of LED based lighting systems result e.g. from energy efficiency and long lifetime, drawbacks result from the fact that usually, a given LED emits light only in a narrow band of wavelengths. Therefore, for example, generation of white light by mixing LED light of different colors remains improvable as small deviations in hue of light emitted by the corresponding LEDs may result in undesirable deviations in color temperature of generated white light.

A further challenge that results from limited emission bands of LEDs is that for example existing LED displays only have a limited color space such that an improvement in color space may enable more natural and realistic presentations.

Further, technological advances in the automotive field enable modern vehicles to be used in different driving modes including manual and automated driving modes. In particular in the latter case, it may be advantageous in many situations if for example pedestrians or police is informed that a moving vehicle is operated in an automated driving mode.

### SUMMARY OF THE INVENTION

It is an object of the present invention to provide an LED based lighting device with an enhanced color space and capable of generating white light with an enhanced tunability of its color temperature. It is a further object of the present invention to provide an LED based lighting device that enables lighting systems of enhanced color space. It is yet a further object of the present invention to provide an LED based lighting device that allows indicating a driving mode of a vehicle. According to a first aspect of the present invention, a lighting device is provided comprising: at least one first light source configured to emit light of a first color; at least one second light source configured to emit light of a second color; wherein the first color is a cyan color, wherein in a CIE color space, the cyan color is defined by x and y color values included in a cyan area with
a green boundary defined by the equation y = 0.500-0.500 x;
a white boundary defined by the equation x = 0.200;
a blue boundary defined by the equation y = 0.320;
and intersection points
x₁ = 0.013, y₁ = 0.494;
x₂ = 0.200, y₂ = 0.400;
x₃ = 0.200, y₃ = 0.320; and
x₄ = 0.040, y₄ = 0.320;
wherein the at least one first light source and the at least one second light source are arranged at the lighting device; and wherein x and y color values of the first color and the second color are selected such that light emitted from the at least one first light source and light emitted from the at least one second light source can be mixed to generate white light.

According to a second aspect of the present invention, a lighting system for a vehicle, comprising the lighting device according to the first aspect is provided, the lighting system further comprising: a controller configured to selectively control the at least one first light source and the at least one second light source; wherein the controller is configured to turn on only the first light source or only the second light source when the vehicle is in an autonomous driving mode.

According to a third aspect of the present invention, a display is provided comprising the lighting device according to the first aspect.

Exemplary embodiments of the first aspect, the second aspect and the third aspect of the invention may have one or more of the properties described below.

According to all aspects of the present invention, x and y color values are provided in the CIE color space as defined in the "CIE Publication 15.2, 1986, Colorimetry, the CIE 1931 standard colorimetric observer".

In an exemplary embodiment, the first light source and the second light source are light emitting diodes, LEDs. It is noted that in exemplary embodiments, the lighting device does not include a light source that by itself is configured to emit white light. To the contrary, it turned out that by mixing colors of the first and the second light source, in exemplary embodiments with a third light source and/or a fourth light source as described below, a particularly advantageous lighting device is enabled that is provided with an enhanced color space and for which a color temperature of white light is generated when the first and the second (and in embodiments the third and/or the fourth) light sources are jointly turned on, and which lighting device can be advantageously tuned to generate white light of desirable appearance.

In order to enable such advantageous mixing, on the one hand, the at least one first light source and the at least one second light source (and in exemplary embodiments the below described at least one third and/or at least one fourth light source) are arranged at the lighting device such that light emitted from the at least one first light source and light emitted from the at least one second light source can be mixed to generate white light. In other words, the at least one first light source and the at least one second light source (and in embodiments the third and/or the fourth light sources) are arranged at the lighting device such that when both the at least one first light source and the at least one second light source (and in embodiments the third and/or the fourth light sources) are turned on, light emitted from the at least one first light source and light emitted from the at least one second light source (and in embodiments light from the third and/or the fourth light sources) is mixed into white light. For example, the at least one first light source and the at least one second light source (and in exemplary embodiments the below described at least one third and/or at least one fourth light source) may be arranged in close proximity to each other and/or may respectively correspond to LED chips provided on a same substrate or are arranged on respective substrates arranged mutually adjacent at the lighting device.

Further, within ranges given herein, x and y color values of the first color and the second color (and in corresponding exemplary embodiments described below of the red / deep red color, the blue color and/or the green color) are selected such that light emitted from the at least one first light source and light emitted from the at least one second light source (and, in the corresponding exemplary embodiments, from the at least one third light source and/or from the at least one fourth light source) can be mixed to generate white light. Thereby, can be mixed is to be understood that in case all light sources are turned on, the emitted light mixes to yield light of white color. Hereby it is further to be noted that being turned on implies that different light sources may be turned on at individual power which may be tuned for each light source to reach the desired color (e.g. white) and/or color temperature.

To enable a particularly beneficial mixing into white light, the first light source is configured to emit light of cyan color with color values as described above. In an exemplary embodiment, in the above defined cyan area, the cyan color has a x value in between 0.008 and 0.220, in particular in between 0.009 and 0.210, in particular in between 0.010 and 0.200, in particular in between 0.120 and 0.200, for example of 0.014, and a y value in between 0.300 and 0.520, in particular in between 0.310 and 0.510, in particular in between 0.315 and 0.500, in particular in between 0.320 and 0.495, and for example of 0.340.

The provision of this first light source is of particular advantage in display applications in which by its provision an available color space can be greatly enhanced into the blue-green range which helps to enable display of more natural and colorful images. The provision of this first light source is further of particular advantage also in case of automotive applications. In such applications, the addition of the first light source not only enhances the available color space to thus enable mixing of more appealing colors, but also adds a further light color usable as new functional light. For example, included in an LED package in combination with one or more amber LEDs, one or more cyan LEDs can be used to indicate an active autonomous drive mode when turned on alone. In turn indicators, the one or more amber LEDs may be used without the cyan LEDs as light sources. The color values of the amber and the cyan LEDs are selected such that, when used in combination, the emitted light adds to white light with appealing color temperature and advantageously usable e.g. as daytime running light, position light, fog light, decorative light or logo illumination in case the lighting device is used at a front of a car or as reversing lamp, position light, decorative light or logo illumination when used at the back of a car. In other words, by adding the at least one first light source, in particular at least one LED, an accessible color space can be greatly enhanced while additional signaling possibilities become feasible.
In an exemplary embodiment, in the CIE color space, the color of the white light is defined by x and y color values included in a white area with
a green boundary defined by the equation y = 0.150 + 0.640 x;
a yellowish green boundary defined by the equation y = 0.440;
a yellow boundary defined by the equation x = 0.500;
a reddish purple boundary defined by the equation y = 0.382;
a purple boundary defined by the equation y = 0.050 + 0.750 x; and
a blue boundary defined by the equation x = 0.310;
and intersection points
x₁ = 0.310, y₁= 0.348;
x₂ = 0.453, y₂ = 0.440;
x₃ = 0.500, y₃ = 0.440;
x₄ = 0.500, y₄ = 0.382;
x₅ = 0.443, y₅ = 0.382; and
x₆ = 0.310, y₆ = 0.283.

In an exemplary embodiment, in this white area, the white light has a x value in between 0.300 and 0.500, in particular in between 0.310 and 0.500, and a y value in between 0.250 and 0.460, in particular in between 0.283 and 0.440. Thus, by using a cyan color light source as first light source, a particularly wide range of white colors becomes accessible such that by selecting an appropriate second light source, a color temperature of a white color resulting from mixing light of the first light source and light of the second light source can be advantageously adjusted within this wide range.

In an exemplary embodiment, the first light source comprises at least one light emitting diode, LED, configured to directly emit light of the cyan color, and wherein in the CIE color space, in the cyan area, the cyan color has a x value in between 0.009 and 0.145, in particular in between 0.010 and 0.140, and a y value in between 0.300 and 0.500, in particular in between 0.318 and 0.495. In other words, the LED of this embodiment is configured to emit light of said cyan color without any wavelength converting structure such as a phosphor layer. In a further exemplary embodiment, the LED configured to directly emit light of said cyan color is further configured to emit light at a wavelength in between 490 and 510 nm. An advantage offered by using an LED emitting light of the desired color is that it offers a simplified construction without a need of further components for adjusting the color. Further, the color of the light emitted may be advantageously tuned by tuning the LED bandgap.

In an exemplary embodiment, the first light source comprises at least one light emitting diode, LED, and at least one corresponding wavelength conversion structure assigned to the at least one LED and configured to convert a wavelength of light emitted from the at least one LED; and wherein in the CIE color space, in the above defined cyan area, the cyan color has a x value in between 0.005 and 0.200, in particular in between 0.010 and 0.180, and a y value in between 0.300 and 0.450, in particular in between 0.350 and 0.420. An advantage offered by using such LED is that the wavelength conversion structure allows finely tuning the color of light emitted from a given LED, thus offering enhanced color tunability for a given class of LEDs. In an exemplary embodiment, the wavelength conversion structure comprises or consists of a layer comprising phosphor materials. An additional advantage offered by using such LED is that the color point of the emitted light is particularly stable even when temperature and current vary as compared e.g. to direct emitting LEDs. This is in particular advantageous for mixing of colors and provides softened requirements in terms of temperature compensation for keeping the mixed color point (of e.g. white) stable.

In an exemplary embodiment, the second light source comprises at least one light emitting diode, LED, wherein the second color is an amber color, and wherein in the CIE color space, the amber color is defined by x and y color values included in an amber area with
a green boundary defined by the equation y = x - 0.120;
a red boundary defined by the equation y = 0.390;
a white boundary defined by the equation y = 0.790 - 0.670 x;
and intersection points
x₁ = 0.545, y₁ = 0.425;
x₂ = 0.560, y₂ = 0.440;
x₃ = 0.609, y₃ = 0.390; and
x₄ = 0.597, y₄ = 0.390.

In an exemplary embodiment, within this amber area, the amber color has a x value in between 0.500 and 0.650, in particular in between 0.545 and 0.609, and a y value in between 0.350 and 0.500, in particular in between 0.390 and 0.440. Thus, in this exemplary embodiment, the lighting device includes first and second light sources, respectively configured to emit light at a cyan and at an amber color. The color values are respectively selected such that, when both light sources are operated at the same time, the emitted light mixes into light of white color. With this configuration, in the above defined white area, the white light has in an exemplary embodiment a x value in between 0.310 and 0.500, and a y value in between 0.283 and 0.440. Further, in an exemplary embodiment, the second light source configured to emit light at the amber color comprises at least one light emitting diode, LED, configured to directly emit light at a wavelength in between 585 nm and 595 nm.

With this configuration, in an exemplary embodiment, the lighting device may advantageously be embodied as turn indicator. When only the second light source is operated, light of amber color is emitted which can be used to indicate a direction into which a vehicle intends to turn. The first light source may advantageously be used by itself to indicate an automated driving state of the vehicle. With both the first and the second light sources operated at the same time, thus yielding mixed white light, the lighting device can be used as white daytime running lamp, as position lamp, as fog lamp, decorative light, logo illumination or as white reversing lamp. Thus, by providing the first cyan color light source in addition to the second amber color light source, the lighting device enables to incorporate all of these functionalities in a single non-complex device.

In an exemplary embodiment, the second light source comprises at least one light emitting diode, LED, and wherein the second color is a red or deep red color, and wherein in the CIE color space, the red or deep red color is defined by x and y color values included in a red or deep red area with
a yellow boundary defined by the equation y = 0.335;
a purple boundary defined by the equation y = 0.980 - x;
and intersection points
x₁ = 0.645, y₁ = 0.335;
x₂ = 0.665, y₂ = 0.335;
x₃ = 0.735, y₃ = 0.265; and
x₄ = 0.721, y₄ = 0.259.

In an exemplary embodiment, within this red or deep red area, the red or deep red color has a x value in between 0.630 and 0.750, in particular in between 0.645 and 0.735, and a y value in between 0.250 and 0.350, in particular in between 0.259 and 0.335. In an exemplary embodiment in which the second light source is configured to emit light of red or deep red color, the second light source comprises at least one light emitting diode, LED, configured to directly emit light at a wavelength in between 602 nm and 780 nm. In particular, in an exemplary embodiment, the second light source is configured to emit light of red color and a wavelength in between 602 nm and 645 nm, and/or light of deep red color and a wavelength in between 645 nm and 780 nm.

Thus, in this embodiment, the lighting device comprises a first and a second light source configured to emit light of cyan color and light of red / deep red color, where respective color values are selected such that, when both light sources are operated simultaneously, the emitted light is mixed to a white colored light. With this configuration, within the above defined white area, the white light has in an exemplary embodiment a x value in between 0.310 and 0.500, and a y value in between 0.283 and 0.440.

With this configuration, in an exemplary embodiment, the lighting device may advantageously be embodied as tail and/or stop light. When only the second light source is operated, light of red / deep red color is emitted which can be used to indicate the backside of a driving vehicle and/or braking of the vehicle. The first light source may advantageously be used by itself to indicate an automated driving state of the vehicle. With both the first and the second light sources operated at the same time, thus yielding mixed white light, the lighting device can be used as white reversing lamp, decorative light or logo illumination. Thus, by providing the first cyan color light source in addition to the second red / deep red color light source, the lighting device enables to incorporate these functionalities in a single non-complex device.

In an exemplary embodiment, in which the second light source comprises the above mentioned at least one light emitting diode, LED, configured to emit light of amber color, the lighting device further comprises a third light source comprising at least one light emitting diode, LED, and configured to emit light of a red or deep red color, wherein the at least one first light source, the at least one second light source and the at least one third light source are arranged at the lighting device and wherein x and y color values of the first color, the second color and the red or deep red color are selected such that light emitted from the at least one first light source, light emitted from the at least one second light source and light emitted from the at least one third light source can be mixed to generate white light. Thereby in the CIE color space, the red or deep red color is defined by x and y color values included in a red or deep red area with
a yellow boundary defined by the equation y = 0.335;
a purple boundary defined by the equation y = 0.980 - x;
and intersection points
x₁ = 0.645, y₁ = 0.335;
x₂ = 0.665, y₂ = 0.335;
x₃ = 0.735, y₃ = 0.265; and
x₄ = 0.721, y₄ = 0.259.
In an exemplary embodiment, within this red or deep red area, the red or deep red color has a x value in between 0.630 and 0.750, in particular in between 0.645 and 0.735, and a y value in between 0.250 and 0.350, in particular in between 0.259 and 0.335.

Thus, in this embodiment, the lighting device comprises a first, a second and a third light source configured to emit light of cyan color, light of amber color and light of red / deep red color, where respective color values are selected such that, when all light sources are operated simultaneously, the emitted light is mixed to a white colored light. With this configuration, within the above defined white area, the white light has in an exemplary embodiment a x value in between 0.310 and 0.500, and a y value in between 0.283 and 0.440.

With this configuration, in an exemplary embodiment, the lighting device may advantageously be embodied as light at a front or at a back of a vehicle. With the possibility to operate all light sources to generate white light, the lighting device may generate white light for the front of a vehicle. With the possibility to operate only the red / deep red light source, the lighting device is applicable at the rear of a vehicle. As the lighting device incorporates both possibilities, the same lighting device can be used at the front and at the rear of a vehicle and can be used according to a driving direction of the vehicle. In addition, the possibility to generate light of amber color enables use as turn indicator lamp at the front and/or at the back of the vehicle. Yet in addition, by providing the first light source of cyan color, the lighting device can be used to indicate an automated driving state of the vehicle while the cyan color advantageously enhances the color space thus enabling a white light color of finely adjustable color temperature.

In an exemplary embodiment, in which the second light source is configured to emit light of red / deep red color, the lighting device further comprises a third light source comprising at least one light emitting diode, LED, and configured to emit light of a blue color; wherein the at least one first light source, the at least one second light source and the at least one third light source are arranged at the lighting device and wherein x and y color values of the first color, the second color and the blue color are selected such that light emitted from the at least one first light source, light emitted from the at least one second light source and light emitted from the at least one third light source can be mixed to generate white light; and wherein in the CIE color space, the blue color is defined by x and y color values included in a blue area with
a green boundary defined by the equation y = 0.320; and
a white and purple boundary defined by the equation x = 0.250.

In an exemplary embodiment, within this blue area, the blue color has a x value in between 0.001 and 0.250, in particular in between 0.001 and 0.220, and a y value in between 0.001 and 0.320, in particular in between 0.001 and 0.215. In an exemplary embodiment the third light source is configured to directly emit light at a wavelength in between 380 nm and 491 nm.

With this configuration, in an exemplary embodiment, the lighting device may advantageously be embodied as light at a back of a vehicle. With the possibility to operate all light sources to generate white light, the lighting device may be used as white reversing lamp. With the possibility to operate only the red / deep red light source, the lighting device may be used as tail and/or stop light. With the possibility to operate only the cyan light source, the lighting device may be used to indicate an automated driving mode of the vehicle. As the lighting device incorporates all three possibilities, the same lighting device can be used at one position at the rear of a vehicle. Providing the first light source of cyan color enhances the color space and thus enables a white light color of finely adjustable color temperature. In an exemplary embodiment of the lighting device comprising the third, blue, light source, within the above defined white area, the white light has a x value in between 0.310 and 0.500, and a y value in between 0.283 and 0.440.

In an exemplary embodiment, the lighting device comprising the second light source configured to emit light of amber color and comprising the third light source configured to emit light of red / deep red color further comprises a fourth light source comprising at least one light emitting diode, LED, and configured to emit light of a blue color, wherein the at least one first light source, the at least one second light source, the at least one third light source and the at least one fourth light source are arranged at the lighting device and wherein x and y color values of the first color, the second color, the red or deep red color and the blue color are selected such that light emitted from the at least one first light source, light emitted from the at least one second light source, light emitted from the at least one third light source and light emitted from the at least one fourth light source can be mixed to generate white light; and wherein in the CIE color space, the blue color is defined by x and y color values included in a blue area with
a green boundary defined by the equation y = 0.320; and
a white and purple boundary defined by the equation x = 0.250.

In an exemplary embodiment, within this blue area, the blue color has a x value in between 0.001 and 0.250, in particular in between 0.001 and 0.220, and a y value in between 0.001 and 0.320, in particular in between 0.001 and 0.215. In an exemplary embodiment the third light source is configured to directly emit light at a wavelength in between 380 nm and 491 nm.

With this configuration, in an exemplary embodiment, the lighting device may advantageously be embodied as light at a front or at a back of a vehicle. With the possibility to operate all light sources to generate white light, the lighting device may generate white light for the front of a vehicle. With the possibility to operate only the red / deep red light source, the lighting device is applicable at the rear of a vehicle. As the lighting device incorporates both possibilities, the same lighting device can be used at the front and at the rear of a vehicle and can be used according to a driving direction of the vehicle. In addition, the possibility to generate light of amber color enables use as turn indicator lamp at the front and/or at the back of the vehicle. Yet in addition, by providing the first light source of cyan color, the lighting device can be used to indicate an automated driving state of the vehicle while the cyan color advantageously enhances the color space thus enabling a white light color of finely adjustable color temperature. In particular, in the present embodiment, the addition of the blue light source further enhances the color space and enables generation of an even further tunable white color which can be further tuned into a blue white region. In an exemplary embodiment of the lighting device comprising the fourth, blue, light source, within the above defined white area, the white light has a x value in between 0.310 and 0.500, and a y value in between 0.283 and 0.440. In a further exemplary embodiment, the lighting device incorporating these first to fourth light sources is arranged at a vehicle and configured to generate a welcome light or decorative light or logo illumination of deep blue color.

In an exemplary embodiment of the lighting device comprising the second, red / deep red, light source and the third, blue, light source the lighting device further comprises a fourth light source comprising at least one light emitting diode, LED, and configured to emit light of a green color; wherein the at least one first light source, the at least one second light source, the at least one third light source and the at least one fourth light source are arranged at the lighting device and wherein x and y color values of the first color, the second color, the blue color and the green color are selected such that light emitted from the at least one first light source, light emitted from the at least one second light source, light emitted from the at least one third light source and light emitted from the at least one fourth light source can be mixed to generate white light. Thereby, in the CIE color space, the green color is defined by x and y color values included in a green area with
a boundary defined by the equation y = 0.400.

In an exemplary embodiment, within this green area, the green color has a x value in between 0.000 and 0.500, in particular in between 0.001 and 0.450, and a y value in between 0.400 and 0.830, in particular in between 0.410 and 0.820. In an exemplary embodiment the fourth, green, light source is configured to directly emit light at a wavelength in between 494 nm and 570 nm.

The lighting device according to this embodiment is provided with a particularly enhanced color space and the capability of generating mixed light colors of particularly natural hue. Therefore, the lighting device according to this embodiment is in particular advantageous for display applications (including automotive display applications). A display incorporating a lighting device according to this embodiment allows for generation of particularly realistic and natural colors.

The lighting system according to the second aspect comprises a controller configured to selectively control (e.g. by turning on or off the respective light source and/or by controlling a respective power applied to the respective light source) the at least one first light source and the at least one second light source, in particular the at least one first light source, the at least one second light source, the at least one third light source and/or the at least one fourth light source. Thereby, the controller may be configured to automatically control the first and/or the second (and/or the third and/or the fourth light source) automatically, e.g. in case of a rear reversing light which is turned on when the vehicle is driven backwards, e.g. in case of stop lights which are turned on when the vehicle brakes. The controller may be configured to control the first and/or the second (and/or the third and/or the fourth light source) in response to user input, e.g. in case of turn indicator lights or in case of an automated driving mode indicator light, which are turned on in response to a corresponding user input. The controller is configured to turn on only the first light source when the vehicle is in an autonomous driving mode. Thus, the lighting device acts as advantageous indicator light indicating the automated drive mode. Thereby, for example pedestrians are informed that a vehicle is not controlled by a person and can act adequately.

In an exemplary embodiment, the lighting device comprises at least one first light source and at least one second light source, in particular an at least one third light source and an at least one fourth light source, respectively configured to emit light of a first and of a second and, in particular of a third and of a fourth color, wherein the controller is configured to control each of the first and the second and, in particular, of the third and the fourth light sources (e.g. by turning on or off a respective light source and/or by controlling a power of the respective light source) such that a color of light generated by mixing light emitted from the first and the second and, in particular, of the third and the fourth light sources is within a color space spanned by respective color points of the first and the second and, in particular, of the third and the fourth light sources.

In an exemplary embodiment, the lighting device comprises at least one first light source, at least one second light source, at least one third light source and at least one fourth light source, respectively configured to emit light of a first, of a second, of a third and of a fourth color. In a particular embodiment, the fourth light source is a light emitting diode, LED, configured to emit white light. Thus, in the exemplary embodiment, the at least one first light source, the at least one second light source, the at least one third light source and the at least one fourth light source, are respectively configured to emit light of a cyan color, of an amber color, of a red / deep red color and white light. With such arrangement, it becomes possible to achieve a particularly flexible lighting device configured to emit light of a color that is tunable in a wide range using only one optical arrangement for the at least four light sources. With such arrangement, in addition to the mentioned vehicular lighting applications, in particular, a colorful (e.g. rainbow) welcome light becomes achievable with a particularly simple lighting device.

According to an exemplary embodiment of the second aspect, the second light source comprises at least one light emitting diode, LED, wherein the controller is configured to turn on only the second light source as turn indicator lamp or as tail or stop lamp, and wherein the controller is configured to turn on both the first and the second light source to generate white light when the vehicle is in a backwards driving mode, as non-autonomous daytime driving lamp light, as position lamp light, as welcome light, as decorative light, as logo illumination or as fog lamp light.

Thus, the aspects and embodiments of the present invention provide an advantageous lighting device which enables incorporating multiple functions in a single device while enhancing a usable color space. The lighting device enables not only indicating an automated driving mode, but further incorporates indicator functions such as a turn indicator function, a stop light function, a rear light function, a reversing light function, a daylight running function, and a fog lamp function in a single non-complex device.

The features and example embodiments of the invention described above may equally pertain to the different aspects according to the present invention. In particular, with the disclosure of features relating to the lighting device according to the first aspect, also corresponding features relating to the lighting system according to the second aspect and to the display according to the third aspect are disclosed.

It is to be understood that the presentation of embodiments of the invention in this section is merely exemplary and non-limiting.

Other features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and are merely intended to conceptually illustrate the structures and procedures described herein.

### BRIEF DESCRIPTION OF THE DRAWINGS

Examples of the invention will now be described in detail with reference to the accompanying drawing, in which:
- Fig. 1a: shows a schematic representation of a lighting device according to an embodiment of the present invention;
- Fig. 1b: shows a schematic representation of a lighting device according to a further embodiment of the present invention;
- Fig. 1c: shows a schematic representation of a lighting device according to a further embodiment of the present invention;
- Fig. 1d: shows a schematic representation of a lighting device according to a further embodiment of the present invention;
- Fig. 2: shows a CIE color space diagram for a lighting device according to an embodiment of the invention;
- Fig. 3: shows a CIE color space diagram for a lighting device according to an embodiment of the invention;
- Fig. 4: shows a CIE color space diagram for a lighting device according to an embodiment of the invention;
- Fig. 5: shows a CIE color space diagram for a lighting device according to an embodiment of the invention;
- Fig. 6: shows a CIE color space diagram for a lighting device according to an embodiment of the invention; and
- Fig. 7: shows a CIE color space diagram for a lighting device according to an embodiment of the invention.

### DETAILED DESCRIPTION OF THE EMBODIMENTS

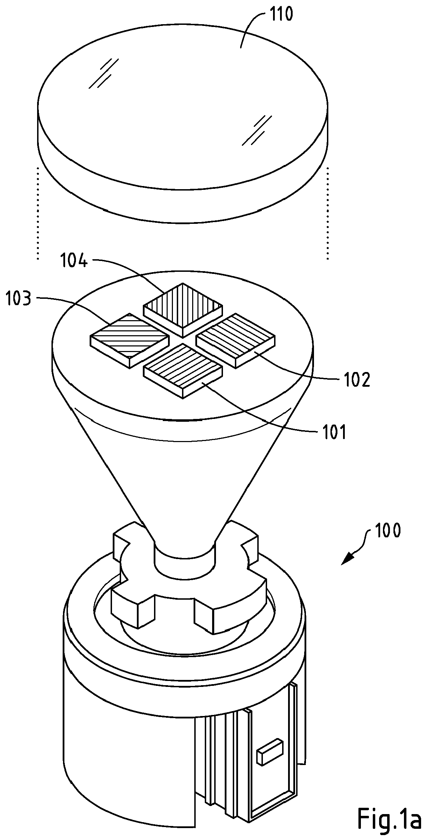

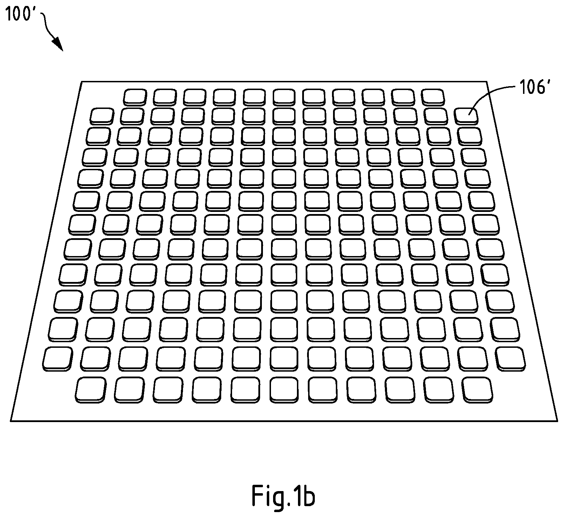

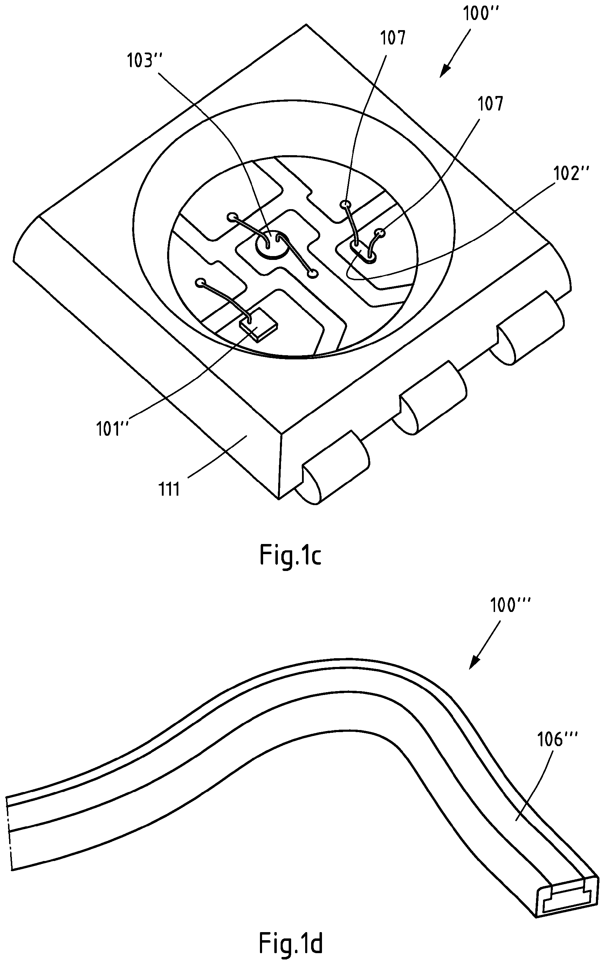

Fig. 1 shows a lighting device 100 according to an embodiment of the invention. The lighting device 100 is a light emitting diode (LED) bulb 100 for example to be used as functional lamp for a vehicle such as a car or a motorcycle, the functional lamp including an automated vehicle marker lamp. In the shown example, four different LEDs 101 (an example of a first light source), 102 (an example of a second light source), 103 (an example of a third light source) and 104 (an example of a fourth light source) are incorporated into the LED bulb 100. However, fewer or more LEDs may be employed. In the shown case, LED 101 is an LED configured to emit light of blue color, LED 102 is an LED configured to emit light of amber color, LED 103 is an LED configured to emit light of red or deep red color and LED 104 is an LED configured to emit light of cyan color. As indicated in the figure, the LEDs are arranged in close proximity at the lighting device 100 such that when more than one LED is turned on, light generated from the LEDs mixes efficiently into a mixing color. In particular, the LEDs are arranged at lighting device 100, and respective color values are selected such that, when all LEDs are turned on, light emitted from all of the LEDs is mixed to generate light of white color. As further indicated in the figure, further optical elements 110 may be provided such as one or more collimating lenses and/or a diffuser.

Fig. 1b shows a lighting device 100' according to a further embodiment. In this embodiment, lighting device 100' is a display including a plurality of pixels 106', where each pixel includes two or more LEDs, e.g. LEDs 101 (an example of a first light source), 102 (an example of a second light source), 103 (an example of a third light source) and 104 (an example of a fourth light source) of Fig. 1a.

Fig. 1c shows a lighting device 100" according to a further embodiment. In this embodiment, lighting device 100" comprises a housing 111 housing three LED dies 101", 102" and 103" electrically contacted using contact lines 107 (only two labeled). LEDs 101", 102" and 103" are further examples of a first, a second and a third light source, configured to emit light of respective colors that can be mixed e.g. into white light when turned on simultaneously. For example, in addition to a unique color of light emitted by the respective LED, in order to achieve white light of a suitable color tone or temperature, each of the LEDs may be turned on at a dedicated predefined power.

Fig. 1d shows a lighting device 100"' according to yet a further embodiment. In this embodiment, lighting device 100"' is embodied as a stripe comprising a plurality of LEDs below lighted surface 106"', where each LED may correspond to any one of the first, the second, the third and/or the fourth light source. It is noted that being configured to emit light of a first color, second color, third color and/or fourth color, in an exemplary embodiment, each of the first, the second, the third and the fourth light source may be configured to tune within a predefined range at the first color, second color, third color and/or fourth color.

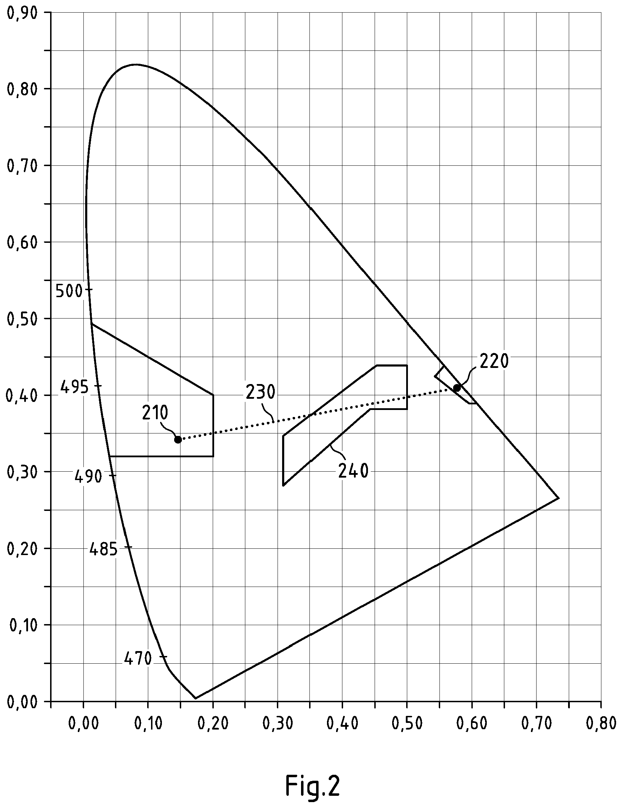

Fig. 2 shows a CIE color space diagram for a lighting device comprising a first light source configured to emit light of a cyan color and a second light source configured to emit light of an amber color. The first light source generates light with a color approximately at point 210 within a cyan area of the color space. The second light source generates light with a color approximately at point 220 within an amber area of the color space. Thereby, the cyan and the amber areas are as defined above. A line 230 connecting point 210 and point 220 crosses a white area 240 of the CIE color space indicating that light generated by mixing light generated by the first light source and light generated by the second light source has a white color. The white area is similarly as defined above.

With the possibility of having turned on only the second light source of amber color (by means of a corresponding controller of a lighting system e.g. of a car), the lighting device is employable as turn indicator lamp of a car. With the possibility of having turned on only the first light source of cyan color, the lighting device is employable to indicate an automated driving mode of the car. Further, with the possibility of having turned on both light sources to generate white light, the lighting device is employable as white daytime running lamp, as position lamp, as fog lamp (at a front of a car) or as reversing lamp (at a back of a car) or as decorative light (at all sides of the car) or as logo illumination (at all sides of the car). The lighting device thus incorporates multiple functionalities within one single device, while the first light source of cyan color not only enables an additional functionality but also enhances an available color space.

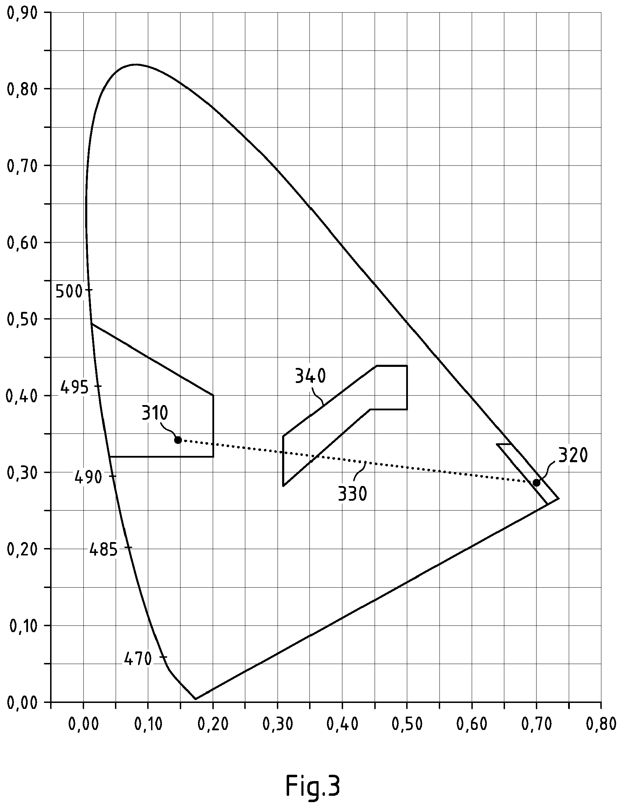

Fig. 3 shows a CIE color space diagram for a lighting device comprising a first light source configured to emit light of a cyan color and a second light source configured to emit light of a red or deep red color. The first light source generates light with a color approximately at point 310 within a cyan area of the color space. The second light source generates light with a color approximately at point 320 within a red or deep red area of the color space, the red area as defined above. A line 330 connecting point 310 and point 320 crosses a white area 340 of the CIE color space indicating that light generated by mixing light generated by the first light source and light generated by the second light source has a white color.

With the possibility of having turned on only the second light source of red or deep red color (by means of a corresponding controller of a lighting system e.g. of a car), the lighting device is employable as stop lamp or tail light lamp at a rear of a car. With the possibility of having turned on only the first light source of cyan color, the lighting device is employable to indicate an automated driving mode of the car. Further, with the possibility of having turned on both light sources to generate white light, the lighting device is employable as white reversing lamp at the back of the car. Again, the lighting device thus incorporates multiple functionalities within one single device, while the first light source of cyan color not only enables an additional functionality but also enhances an available color space.

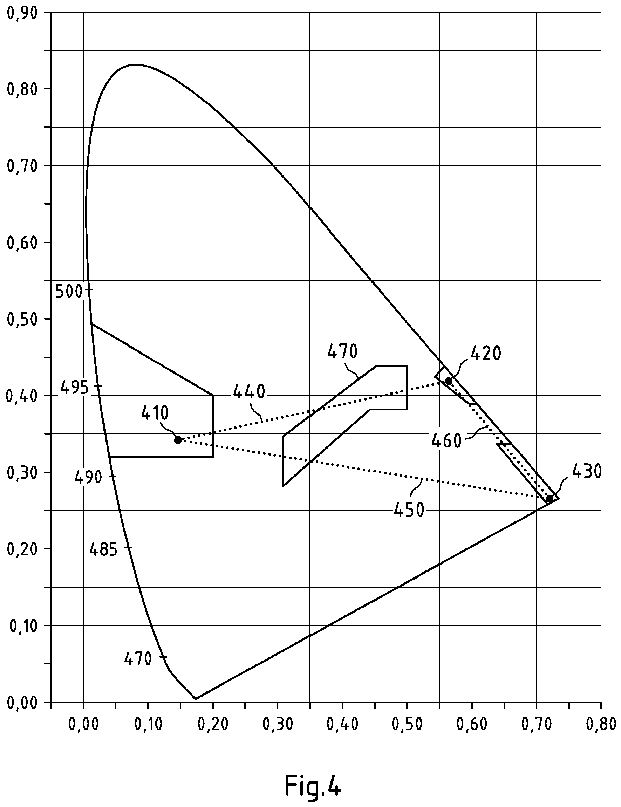

Fig. 4 shows a CIE color space diagram for a lighting device comprising a first light source configured to emit light of a cyan color, a second light source configured to emit light of an amber color and a third light source configured to emit light of a red or deep red color. The first light source generates light with a color approximately at point 410 within a cyan area of the color space. The second light source generates light with a color approximately at point 420 within an amber area of the color space. The third light source generates light with a color approximately at point 430 within a red or deep red area of the color space. A line 440 connecting point 410 and point 420 crosses a white area 470 of the CIE color space. A line 440 connecting point 410 and point 430 similarly crosses a white area 470 of the CIE color space. Thus, as indicated by lines 440, 450 and 460, light generated by mixing light generated by the first light source, light generated by the second light source and light generated by the third light source can be adjusted to have a color within a range defined by the area enclosed by lines 440, 450 and 460. Thus, within this area, in particular light of a white color can be generated, this white color being particularly tunable within the range defined by lines 440, 450 and 460.

With the possibility of having turned on only the second light source of amber color (by means of a corresponding controller of a lighting system e.g. of a car), the lighting device is employable as turn indicator lamp of a car. With the possibility of having turned on only the third light source of red or deep red color (by means of a corresponding controller of a lighting system e.g. of a car), the lighting device is employable as stop lamp or tail light lamp at a rear of a car. With the possibility of having turned on only the first light source of cyan color, the lighting device is employable to indicate an automated driving mode of the car. Further, with the possibility of having turned on all light sources to generate white light, the lighting device is employable as white daytime running lamp, as position lamp, as fog lamp (at a front of a car) or as reversing lamp (at a back of a car). With all these possibilities, the lighting device can advantageously be employed at the front and at the back of a car while functionalities of the lamp can advantageously be adjusted to the driving direction of the car. Thus, the lighting device thus advantageously incorporates multiple functionalities within one single device, while the first light source of cyan color not only enables an additional functionality but also enhances an available color space.

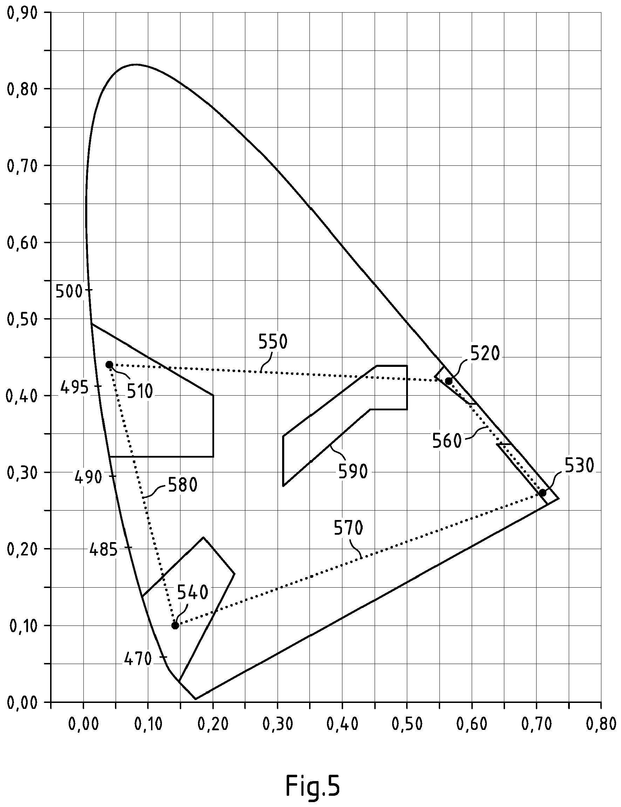

Fig. 5 shows a CIE color space diagram for a lighting device comprising a first light source configured to emit light of a cyan color, a second light source configured to emit light of an amber color, a third light source configured to emit light of a red or deep red color and a fourth light source configured to emit light of a blue color. The first light source generates light with a color approximately at point 510 within a cyan area of the color space. The second light source generates light with a color approximately at point 520 within an amber area of the color space. The third light source generates light with a color approximately at point 530 within a red or deep red area of the color space. The fourth light source generates light with a color approximately at point 540 within a blue area of the color space, the blue area as defined above. Lines 550, 560, 570 and 580 connect the respective points and cross white area 590 thus indicating the possibility to generate white light by mixing light generated by the respective light sources.

The lighting device according to Fig. 5 is applicable at a front and/or at a back of a vehicle such as a car. By selectively controlling the respective light sources to generate cyan, amber or red colors, the corresponding functionalities can be enabled. At the same time, the addition of the blue light source greatly enhances the available color space, enables a white color with a colder color temperature and enables use of the lighting device to generate a blue or colorful or color changing welcome light or decorative light or logo illumination.

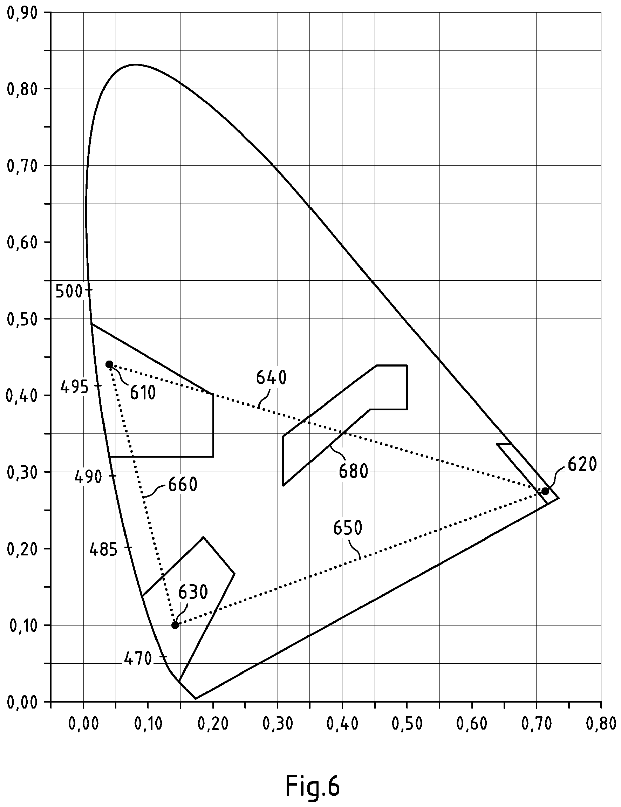

Fig. 6 shows a CIE color space diagram for a lighting device comprising a first light source configured to emit light of a cyan color, a second light source configured to emit light of a red or deep red color and a third light source configured to emit light of a blue color. The first light source generates light with a color approximately at point 610 within a cyan area of the color space. The second light source generates light with a color approximately at point 620 within a red / deep red area of the color space. The third light source generates light with a color approximately at point 630 within a blue area of the color space. Lines 640, 650, and 660 connect the respective points and cross white area 680 thus indicating the possibility to generate white light by mixing light generated by the respective light sources.

The lighting device according to Fig. 6 is in particular applicable at a back of a vehicle such as a car. By selectively controlling the respective light sources to generate cyan and red colors, the corresponding functionalities can be enabled. At the same time, the addition of the blue light source greatly enhances the available color space, enables a white color with a colder color temperature and enables use of the lighting device to generate a blue or colorful or color changing welcome light or decorative light or logo illumination.

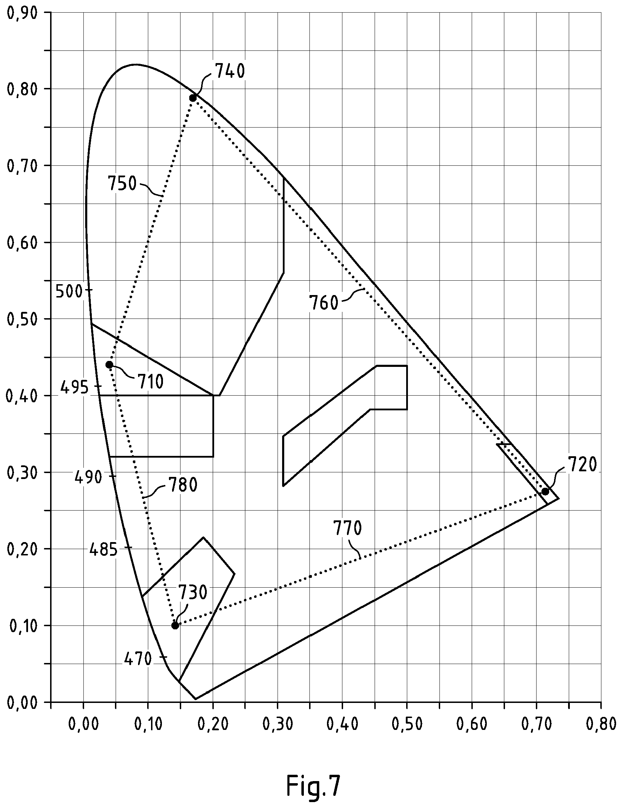

Fig. 7 shows a CIE color space diagram for a lighting device comprising a first light source configured to emit light of a cyan color, a second light source configured to emit light of a red or deep red color, a third light source configured to emit light of a blue color and a fourth light source configured to emit light of a green color. The first light source generates light with a color approximately at point 710 within a cyan area of the color space. The second light source generates light with a color approximately at point 720 within a red / deep red area of the color space. The third light source generates light with a color approximately at point 730 within a blue area of the color space. The fourth light source generates light with a color approximately at point 740 within a green area of the color space, the green area as defined above. Lines 750, 760, 770 and 780 connect the respective points and span an area essentially corresponding to the entire color space.

The lighting device according to Fig. 7 is thus in particular advantageously applicable for display applications. In other words, a lighting device with light sources generating light at points 710, 720, 730 and 740 of Fig. 7 is in particular suited to be used as pixel 106' for a lighting device 100' as shown in Fig. 1b. With such lighting device, an enhanced color space becomes available which facilitates generation of realistic and natural colors.

### LIST OF REFERENCE SIGNS:

| | |
|---|---|
| 100, 100', 100", 100''' | Lighting device |
| 101, 102, 103, 104, 101", 102", 103" | LEDs |
| 106' | Pixel |
| 106''' | lighted surface |
| 107 | Contact line |
| 110 | Optical element |
| 111 | Housing |
| 210, 310, 410, 510, 610, 710 | Cyan points |
| 220, 420, 520 | Amber points |
| 320, 430, 530, 620, 720 | Red points |
| 540, 630, 730 | Blue points |
| 740 | Green point |
| 240, 340, 470, 590, 680 | White areas |
| 230, 330, 440, 450, 460, 550, 560, 570, 580, ... ... 640, 650, 660, 750, 760, 770, 780 | Connection lines |

## Claims

1. A lighting device, comprising:
- at least one first light source configured to emit light of a first color;
- at least one second light source configured to emit light of a second color;
- wherein the first color is a cyan color,
- wherein in a CIE color space, the cyan color is defined by x and y color values included in a cyan area with
a green boundary defined by the equation y = 0.500-0.500 x;
a white boundary defined by the equation x = 0.200;
a blue boundary defined by the equation y = 0.320;
and intersection points
x₁ = 0.013, y₁ = 0.494;
x₂ = 0.200, y₂ = 0.400;
x₃ = 0.200, y₃ = 0.320; and
x₄ = 0.040, y₄ = 0.320;
- wherein the at least one first light source and the at least one second light source are arranged at the lighting device; and
- wherein x and y color values of the first color and the second color are selected such that light emitted from the at least one first light source and light emitted from the at least one second light source can be mixed to generate white light.

2. The lighting device according to claim 1,
- wherein in a CIE color space, the color of the white light is defined by x and y color values included in a white area with
a green boundary defined by the equation y = 0.150 + 0.640 x;
a yellowish green boundary defined by the equation y = 0.440;
a yellow boundary defined by the equation x = 0.500;
a reddish purple boundary defined by the equation y = 0.382;
a purple boundary defined by the equation y = 0.050 + 0.750 x; and
a blue boundary defined by the equation x = 0.310;
and intersection points
x₁ = 0.310, y₁ = 0.348;
x₂ = 0.453, y₂ = 0.440;
x₃ = 0.500, y₃ = 0.440;
x₄ = 0.500, y₄ = 0.382
x₅ = 0.443, y₅ = 0.382; and
x₆ = 0.310, y₆ = 0.283.

3. The lighting device according to claim 1 or claim 2, wherein the first light source comprises at least one light emitting diode, LED, configured to directly emit the light of the cyan color, and wherein in the CIE color space, in the cyan area, the cyan color has a x value in between 0.013 and 0.200, and a y value in between 0.320 and 0.494.

4. The lighting device according to claim 1 or claim 2, wherein the first light source comprises at least one light emitting diode, LED, and at least one corresponding wavelength conversion structure assigned to the at least one LED and configured to convert a wavelength of light emitted from the at least one LED; and wherein in the CIE color space, in the cyan area, the cyan color has a x value in between 0.005 and 0.250, and a y value in between 0.300 and 0.500.

5. The lighting device according to claim 1 or claim 2, wherein the second light source comprises at least one light emitting diode, LED, wherein the second color is an amber color, and wherein in the CIE color space, the amber color is defined by x and y color values included in an amber area with a green boundary defined by the equation y = x - 0.120;
a red boundary defined by the equation y = 0.390;
a white boundary defined by the equation y = 0.790 - 0.670 x;
and intersection points
x₁ = 0.545, y₁ = 0.425;
x₂ = 0.560, y₂ = 0.440;
x₃ = 0.609, y₃ = 0.390; and
x₄ = 0.597, y₄ = 0.390.

6. The lighting device according to claim 5, wherein the LED comprised by the second light source is configured to directly emit light at a wavelength in between 585 nm and 595 nm.

7. The lighting device according to claim 1 or claim 2, wherein the second light source comprises at least one light emitting diode, LED, and wherein the second color is a red or deep red color, and wherein in the CIE color space, the red or deep red color is defined by x and y color values included in a red or deep red area with
a yellow boundary defined by the equation y = 0.335;
a purple boundary defined by the equation y = 0.980 - x;
and intersection points
x₁ = 0.645, y₁ = 0.335;
x₂ = 0.665, y₂ = 0.335;
x₃ = 0.735, y₃ = 0.265; and
x₄ = 0.721, y₄ = 0.259.

8. The lighting device according to claim 7, wherein the LED comprised by the second light source is configured to directly emit light at a wavelength in between 602 nm and 780 nm.

9. The lighting device according to claim 5, further comprising a third light source comprising at least one light emitting diode, LED, and configured to emit light of a red or deep red color,
wherein the at least one first light source, the at least one second light source and the at least one third light source are arranged at the lighting device and wherein x and y color values of the first color, the second color and the red or deep red color are selected such that light emitted from the at least one first light source, light emitted from the at least one second light source and light emitted from the at least one third light source can be mixed to generate white light; and wherein in the CIE color space, the red or deep red color is defined by x and y color values included in a red or deep red area with
a yellow boundary defined by the equation y = 0.335;
a purple boundary defined by the equation y = 0.980 - x;
and intersection points
x₁ = 0.645, y₁ = 0.335;
x₂ = 0.665, y₂ = 0.335;
x₃ = 0.735, y₃ = 0.265; and
x4 = 0.721, y4 = 0.259.

10. The lighting device according to claim 7, further comprising a third light source comprising at least one light emitting diode, LED, and configured to emit light of a blue color;
wherein the at least one first light source, the at least one second light source and the at least one third light source are arranged at the lighting device and wherein x and y color values of the first color, the second color and the blue color are selected such that light emitted from the at least one first light source, light emitted from the at least one second light source and light emitted from the at least one third light source can be mixed to generate white light; and wherein in the CIE color space, the blue color is defined by x and y color values included in a blue area with
a green boundary defined by the equation y = 0.320; and
a white and purple boundary defined by the equation x=0.250.

11. The lighting device according to claim 9, further comprising a fourth light source comprising at least one light emitting diode, LED, and configured to emit light of a blue color;
wherein the at least one first light source, the at least one second light source, the at least one third light source and the at least one fourth light source are arranged at the lighting device and wherein x and y color values of the first color, the second color, the red or deep red color and the blue color are selected such that light emitted from the at least one first light source, light emitted from the at least one second light source, light emitted from the at least one third light source and light emitted from the at least one fourth light source can be mixed to generate white light; and wherein in the CIE color space, the blue color is defined by x and y color values included in a blue area with
a green boundary defined by the equation y = 0.320; and
a white and purple boundary defined by the equation x=0.250.

12. The lighting device according to claim 10, further comprising a fourth light source comprising at least one light emitting diode, LED, and configured to emit light of a green color;
wherein the at least one first light source, the at least one second light source, the at least one third light source and the at least one fourth light source are arranged at the lighting device and wherein x and y color values of the first color, the second color, the blue color and the green color are selected such that light emitted from the at least one first light source, light emitted from the at least one second light source, light emitted from the at least one third light source and light emitted from the at least one fourth light source can be mixed to generate white light; and wherein in the CIE color space, the green color is defined by x and y color values included in a green area with
a boundary defined by the equation y = 0.400

13. A lighting system for a vehicle, comprising the lighting device according to any one of claims 1 to 12, further comprising:
- a controller configured to selectively control the at least one first light source and the at least one second light source; wherein the controller is configured to turn on only the first light source or only the second light source when the vehicle is in an autonomous driving mode.

14. The lighting system according to claim 13, wherein the second light source comprises at least one light emitting diode, LED, wherein the controller is configured to turn on only the second light source as turn indicator lamp or as tail lamp or as stop lamp, or as decorative light or as logo illumination, and wherein the controller is configured to turn on both the first and the second light source to generate white light as daytime running light, as position light, as front fog light, as decorative light or as logo illumination.

15. A display comprising the lighting device according to any one of claims 1 to 12.
